# EUROPEAN PATENT APPLICATION

(11) **EP 1 154 626 A1**
(43) Date of publication of application: **14.11.2001**
(21) Application number: 00650049.0
(22) Date of filing: 12.05.2000
(51) Int. Cl.: H04M 3/51, H04M 7/00, H04M 3/38, H04M 3/42

(54) **A call back system with authentication for internet users and user profile dependent advertising**

(71) Applicant: Gothington Software Limited, Clondalkin, Dublin 22 (IE)
(72) Inventor: Barry, Gerald, Kildangan, Co. Kildare (IE); Naughton, Vincent, Naas, Co. Kildare (IE); Ward, Paul, Dublin 6W (IE); Moore, Christopher, Dublin 16 (IE); Maloney, Padraig, Lucan, Co. Dublin (IE)
(74) Representative: Hanna, Peter William Derek

(57) **Abstract**

The invention provides a call back system that effects communication between a remote user device (1a,1b) and a server (3) based upon the remote device initiating the communication link (22,51) and the server completing the link (27,58). The initiation of the communication link effects the display of advertisement logos or banners on the remote user device, and having been previously stored locally on the remote user device. The advertisement logos being associated with user parameters of the remote user device.

## Description

### Field of the Invention

The invention relates to call back systems and in particular to a system that allows interaction between a remote user and a server to be conducted on the basis of a call back from the server to the user. The server maintains a database of user profiles and instigates the call back based on the specific user profile for that call.

### Background to the Invention

With the growth of telecommunications and the internet, large scale access to remote servers and facilities over networks is becoming more common. Typically, this involves the remote user initiating a dial up over a telecommunication network to the remote server, the call charge being incurred on the remote user's telecommunication bill. With the growth of internet service providers (ISP's) and other large scale users of phone networks, the remote servers with large scale usage, have been able to negotiate reduced call rates for their call up numbers from the telecommunication companies. Traditionally the ISP's have used this reduced rate to attract more customers to use their facilities as this incurs less telecommunication charges for the user. Nevertheless, such charges are still incurred by the user directly from the telecommunication companies with no involvement from the ISP

Call back systems are well known in areas as varied as education, research facilities, security etc.. Known call back systems such as those based on the UNIX platform require the user to initiate the call and contact the remote server directly, run a script on the remote server which then instigates a call back procedure. Such functionality enables the user to transfer information between the remote server and the user based on telecommunication charges incurred by the remote server.

Alternative systems use the call back facility to authenticate the origin or identity of the user. By activating the call back routines it is possible for the remote server to validate or verify that the user requesting information or access to the system is the authorised user.

Although such known systems enable the user to communicate with the remote server at the expense of the remote server, they typically require at least the initial call to be made, and associated cost incurred by the user, before the call back is made. Furthermore, as there is no direct commercial benefit to the server in calling back the user, there has not been widespread adoption of the call back facilities by commercial organisations.

### Object of the Invention

It is an object of the present invention to provide a call back system to enable a remote user to connect with a server, the connection between the server and the remote user device being activated by the server, the call back facility having improvements and advantages over call back systems already known.

### Summary of the Invention

Accordingly the invention provides a call back system to facilitate a connection to be effected between a remote user device and a server over a network, the system comprising:
a database having a plurality of user profiles, each user profile identified with a specific user and associated with specified user parameters,
call reception means for receiving a user request from a remote user device,
user authentication means for authenticating the received call with a specific user profile on the database, and
call back means for effecting a call back to the remote user device using the associated user parameters for that user device.

The system preferably further comprises a data cache locatable on the user device, the data cache adapted to store at least one user associated parameter, the system adapted to display the user associated parameter from the data cache on initiation of the user request by the remote user device.

The system may additionally provide transmission means adapted to update the user associated parameters stored on the remote device cache, the update of the associated parameters being effected during communication between the remote device and the server.

The associated parameters are preferably advertising media, the advertising media being associated with the specific user profile of the user remote device.

The network is typically the internet, with the remote user device being a thin client device or a personal computer and the server being an internet service provider. Alternatively the network may be a television network with the client being a local television subscriber and the server being the television broadcaster or cable company.

The invention also provides a method for initiating a call back from a server to a remote user device over a network comprising the server side steps of:
receiving a call from the remote user device,
authenticating said remote user device using specified user parameters maintained on a server database of user profiles,
establishing a telecommunication connection between the server and the remote user device.

The invention also provides a computer program for effecting the method steps outlined above.

The invention also provides a computer implemented method of displaying advertising media, the choice of advertising media being selected on the basis of a user profile, the display of the advertising media being effected on initiation of a communication link between a remote user device and a server, the advertising media having been previously stored locally on the remote user device.

Furthermore the invention provides a system and method for initiating a call back between a server and a remote user device substantially as hereinafter described with reference to the following drawings.

### Brief Description of the Drawings

Figure 1 shows a network architecture according to the present invention,
Figure 2 is a process flow chart showing high level interaction between a remote user front end and a server back end,
Figure 3 is a detailed process flow chart show the method steps associated between the remote user and the server,
Figure 4 shows the process flow associated with the initiation of a communication by the user,
Figure 5 shows the steps on the user side when the user initiates a communication to the server,
Figure 6 shows the process steps associated with identifying the user as a verified user,
Figure 7 shows the termination steps associated with terminating a call,
Figure 8 shows how the remote user device may confirm a communication from the server,
Figure 9 shows the establishment of communication between the remote user device and the server,
Figure 10 shows the credential input required for roaming users,
Figure 11 shows the interaction on the remote user device when initiating a call to the server during roaming access, and
Figure 12 shows the credential lookup during roaming access.

### Detailed Description of the Drawings

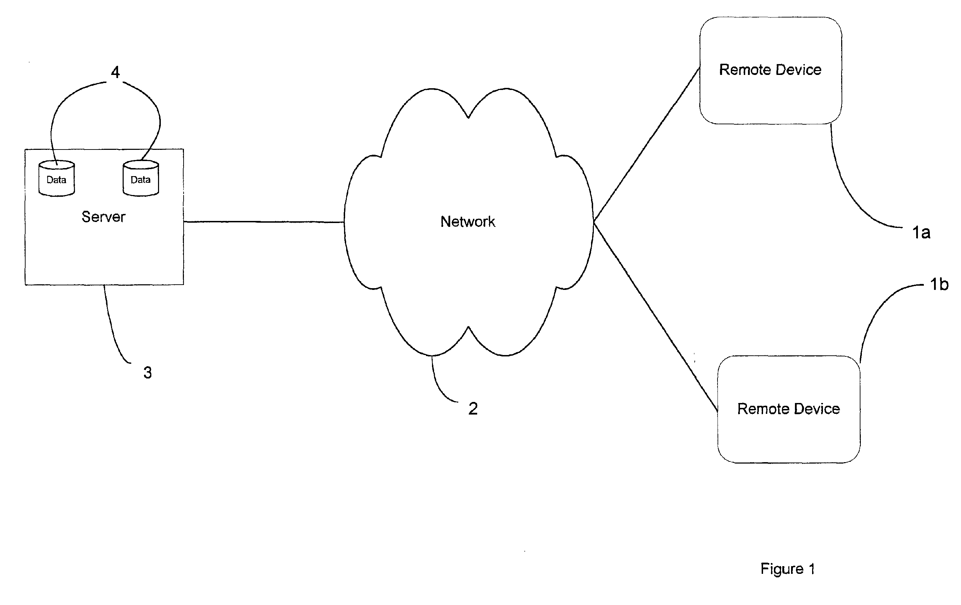

Figure 1 shows a network architecture of the type used in the present invention. At least one remote user or client device 1a, 1b, typically a telephone apparatus, modem, personal computer, thin client device such as a web-phone, or the like, communicates over a network 2 with a server 3. The server 3 maintains a data-store or database 4 of defined user or client profiles identifying associated allowable user devices. The client profile typically stores information such as a user personal characteristics; name, age, sex, etc., together with specific shopping or marketing preferences. The server is typically an internet service provider (ISP), although it will be appreciated by those skilled in the art that the present invention is not limited to communication with internet service providers. The network is typically a telecommunication network, which may equally be a fixed line or wireless telecommunication network. Suitably the network is the internet, although it will be apparent to those skilled in the art that the method and apparatus of the present invention is applicable to any communication between a remote user device and a server. Such alternative networks may include digital television networks, private client/server networks such as financial institutes and their clients and the like.

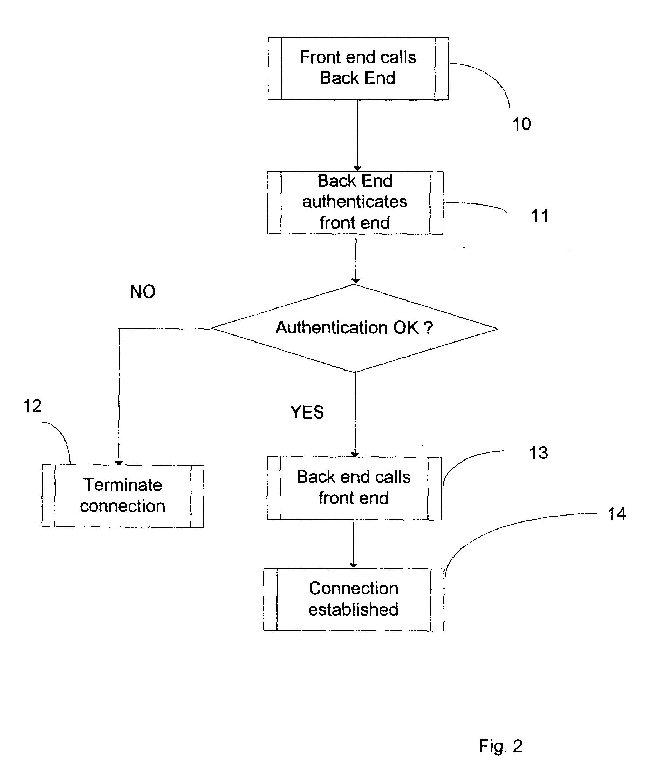

Figure 2 is a high level process flow chart showing the method steps associated with the process of the present invention. A remote user 1a, 1b initiates a call to a server ( Step 10). The server identifies the user, typically using the caller line identification (CLI), and matches the user with predefined users stored in data-stores 4 of the server 3 (Step 11). If no match is found, or a match is found but the user is not authorised to proceed then the authentication process fails and the call is terminated ( Step 12). If the authentication process is successful and the user is authorised to proceed further, then the server 3 terminates the user initiated call and calls the user back ( Step 13), thereby establishing a communication between the server 3 and the user 1. All future communication is at the expense of the server 3.

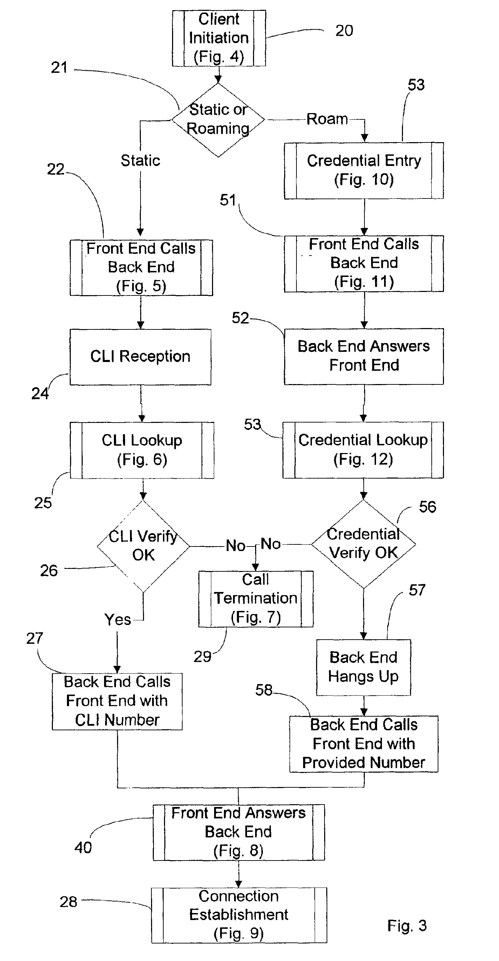

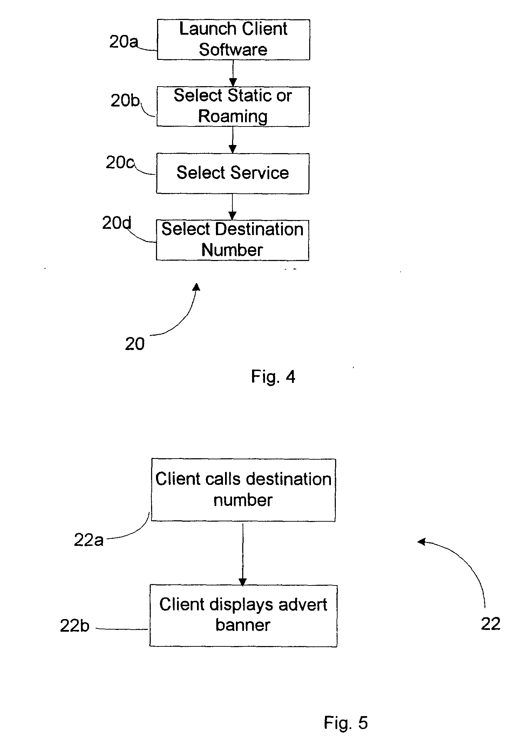

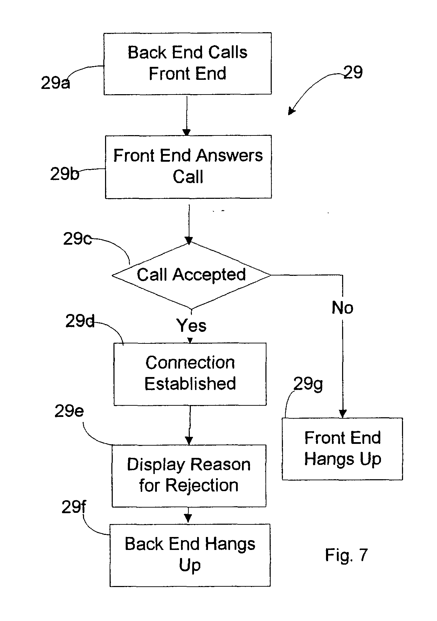

Figure 3 is a more detailed process flow outlining various steps or possibilities that may occur during communication, and uses the example of communication between a remote home user accessing the internet via an ISP. Where appropriate cross references to associated Figures ( Figures 4 to 12), which detail the process steps outlined in Figure 3, are given at the required locations. The communication or process flow is preferably resultant from a software script which requires prior installation on the remote user device. Typically, in the case of user access to the internet from a personal computer via an ISP, the installed software replaces the normal dial up software that a user would have used to access the ISP.

The user side software can be provided to the user in a variety of ways dependent on the user and ISP preference. Typical examples include;
a) the download from a web-site of a self extractable program,
b) the installation from disk,
c) the installation by a PC manufacturer or distributor.

The process is initiated at step 20 (also the default option), wherein the user is prompted to confirm that they are accessing the Internet from their " home" location, i.e. the location defined at registration, or whether they are accessing over a non-defined location. This client initiation step may include the further feature ( not shown) of requiring the user to enter the call back number. Such an entry may be used in situations whereby the server does not call the remote user device back on the basis of the CLI's but rather on the basis of a user input number. As shown in Figure 4 and the associated sub steps ( 20a- 20d) the initiation of the interaction requires the user to activate client software ( which as detailed above is residing on the user device) and typically select a static or roaming option ( Step 20b). The user input prompts the script or computer program to adopt either a roaming or static profile ( Step 21). It is possible to include an option of service provider numbers - depending for example on user location and whether the user has two or more service providers available, and these may also be selected at this juncture.

### Home location

On confirming that the user is accessing from a "home" or static location the script proceeds to access the Internet by dialling the ISP's access number (Step 22). Specific steps associated with this are outlined in Figure 5 where it is details how the initiation of the ISP number by the remote user device (Step 22a) effects a display of a suitable electronic advertisement banner, such as those known on internet web pages, on the remote user device (Step 22b). This may be effected by use of a dedicated defined dialler screen, or if the interface is a known browser, a simple display on the browser page of the defined banner. This advertisement banner is suitably retrieved from a local cache, where it has been stored from a previous interaction with the server, or where it was originally downloaded on installation of the software on the user machine. The material on the banner is specifically directed towards the user profile of the specific user, and the nature of this advertisement can be customised depending on the caller's preferences as defined in their initial set-up and stored in the user credentials database 4. The parameters of the advertising media banner are thus linked to and defined by the user profile of the remote user device.

Depending on the nature of the incoming call, it is possible for the server to determine from a calling line identity (CLI) the phone number of the incoming call without the call being answered (Step 24). The caller or remote device will receive a busy tone or Ring Tone No Reply (RTNR) and then be disconnected by a call sub answer signal being sent from the ISP's routers to the telecom network. The software on the server takes the captured CLI and checks it against those stored in a database (Step 25).

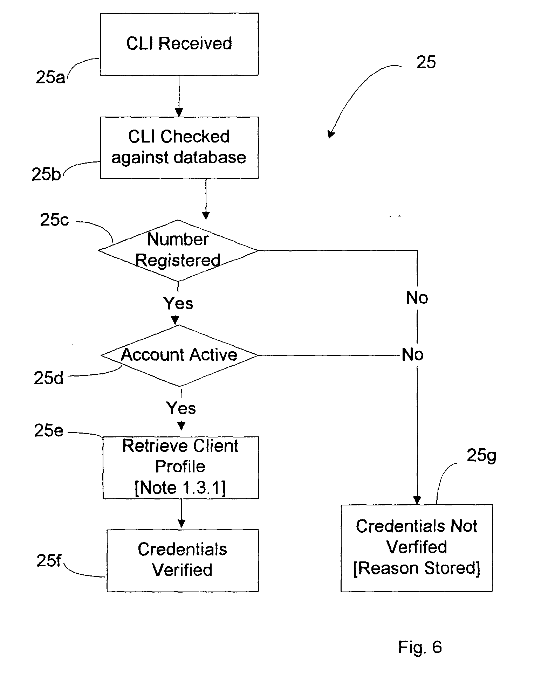

As shown in Figure 6, this CLI lookup requires a number of interactions with the server database. The CLI recorded is initially checked against the database ( Step 25b) which determines whether the number is registered as authorised to use the service (Step 25c). If the number is registered a further check is made to determine whether the account associated with the number is still active (Step 25d). An affirmative check to both these questions effects the retrieval from the database of relevant extracts of the client profile (Step 25e), and the subsequent verification of the user credentials ( Step 25f). A negative answer will result in the reason for the process being stopped and the credentials of the unauthorised user may be stored (Step 25g).

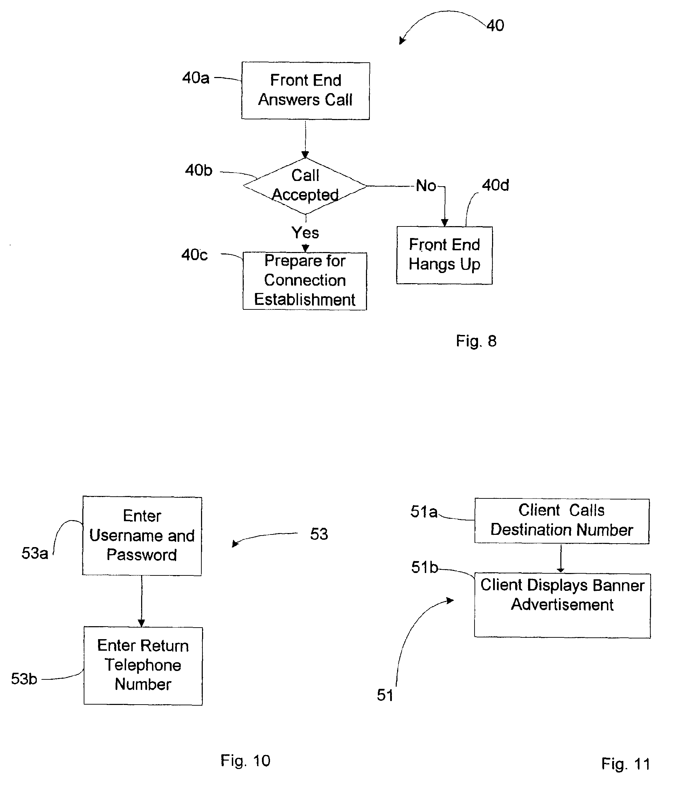

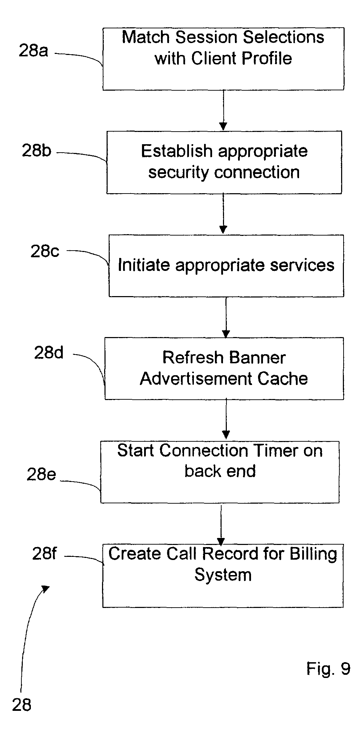

A verification of the user (Step 26) results in a call or connection being returned to the CLI number (Step 27). Once the remote user device accepts this call ( Step 40 and Figure 8 ( accepting of the call by the remote user or front end (Steps 40a -40d))) the caller is connected to the Internet (Step 28). As shown in Figure 9, at this point the software initiates a matching of the session with the client profile (Step 28a), establish appropriate security clearance for the interaction (Step 28b) and initiate the appropriate services associated with the service. A refresh of the stored banner advert on the local device cache (Step 28d) will be effected and the server opens a call record (Step 28e), the data entered in the specific fields depending on the caller's credentials. Typical data fields available for recordal include the Date, Time, Callers CLI, Account Number, Access Type (Home or Roaming), Service Code, a date stamp, and the call open and call close time; i.e. all records typically necessary to effect a call record for possible billing purposes (Step 28f).

### Roaming Access

If the user is not accessing from a "home" location, they will be prompted to enter their appropriate credentials (Step 53). Such an alternative is also used where the server system is unable to detect from the CLI an appropriate call back number and rather relies on the user input. As shown in Figure 10, this typically requires the entry of the user name and password (Step 53a) and a return telephone number (Step 53b). The completion of this credential entry step then prompts the client or remote user to initiate a call to the entered remote server (Step 51). Figure 11 illustrates the process flow on the client device on activation of these steps, namely the calling of the destination number (Step 51a) and the display of suitable banner advertisement screens from the local cache (Step 51b).

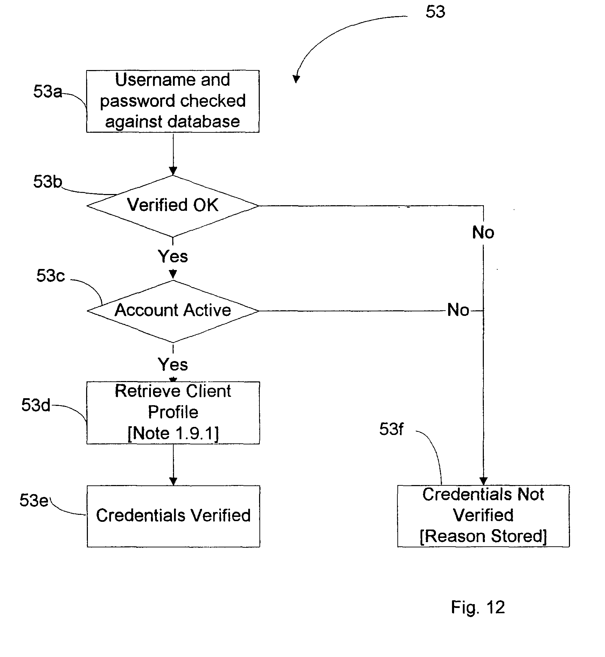

On answering the call from the remote device (Step 52) the server conducts a credential lookup of the remote device (Step 53). Similarly to that for the static device, this credential look up checks the username and password of the remote user against a database (Step 53a/ 53b) and verifies that the account is active (Step 53c). Confirmation that all is in order effects the retrieval from the server data cache of a portion of the user profile (Step 53d) and the verification of the credentials (Step 53e). All these steps are illustrated in Figure 12.

The completion of the verification of the caller identity (Step 56) effects the remote user device to terminate the call to the server (Step 57), and the subsequent calling of the remote user back by the server using the provided number (Step 58). Similarly to that described with reference to the static interaction Figures 8 and 9, the communication between the remote user and the server is thereby allowed

In either example of the static or roaming initiated call failure of the verification of the caller identity (Steps 26/ 56) results in a termination of the communication between the server and remote user device. This termination step may result in the server actually calling back the user device to detail the reason for the failure of the connection - so as to enable a user to rectify the situation for future occasions, or may alternatively simply kill the connection.

### Home and Remote User:- Connection Established

Once the caller's details have been confirmed by the system and the return call has established a clear channel using the return path between the caller's modem, the ISP's routers and their head-end which is the ISP's interface to the internet. Thus, the remote device caller is given access to the Internet at the speed allowed by the telecom network. The user or the predefined call time out criteria can drop this connection at any time. The call time out criteria can be defined by the ISP as a system setting or by the user in the their user profile. This drop connection closes the call record and passes the record for mediation to the ISP's billing system. Such information may include for example; date, time, caller CLI, account number, access type ( home or remote), a service code, date stamp, call open and close time. The service code is typically used to identify the options that the user avails of. The code will tell the ISP's billing system to charge for this instance of usage.

The System Administrator will typically have a Windows style GUI screen which will allow them to: -
Set-up new users
Cancel or suspend users
Change user profile details
Change the Call time out duration

Using the system and method of the present invention it is possible for a remote user to access a server or service provider at a cost lower than that normally available to users. Alternative operators, such as service providers and telecom operators, have access to interconnect rates, which are cheaper than normal retail rates, such that it is cheaper for an alternative operator to deliver a call to a business or home than for the local user to connect to the server. Using the system of the present invention the service provider can provide user access to the system at a reduced telecom rate, or alternatively provide the call access at a nominal rate with extra revenue being made up by the advertisement income from the display of the banner advertisement. As the displayed advertising banner media are linked to the user profile using the connection the server provider is able to more directly market specific products or services. This direct marketing approach is very attractive for commercial advertisers Furthermore, as every connection initiates a push from the network server of a new advert to be stored and displayed locally, the commercial advertiser is able to avail of direct up to date advertising. The advert which has been pushed from the server (or pulled to the user device) will be displayed during the next connection initiation. Alternatively, the refresh rate may be more frequently.

The system and method of the present invention is a scaleable product which allows with ISP's to provide internet service with a package of applications which present a number of unique cost reduction and revenue generation opportunities while adding value to the ISP's business. Cable operators may, using the system and method of the present invention, effectively target customers not on their franchise while enabling Digital T.V providers to offer their services at a reduced cost.

The inherent ability to control access calls enables the ISP to make more efficient use of their network by choosing the return path within their network and the point of interconnect with the local loop provider and avoid traffic bottlenecks during peak times. This will also improve the ISP's quality of service, as customers will always be connected on their first attempt.

Examples of a number of applications effected by the system and method of the present invention which enable an ISP to reduce the cost of service provision or generate incremental revenue include:
1. Network based applications which can reduce the cost of providing un-metered Internet access. For example, such an application would be based on the principle that it is cheaper for an ISP with a telecommunications operating licence to call a customer than to incur the cost of that customer accessing the internet by calling a Freefone number. The system application will validate the caller and connect them to the Internet by capturing their Calling Line Identity or in some other suitable manner such as those outlined above and by performing a number of checks to determine account privileges before returning the call. This procedure happens in real time and the caller notices little difference compared to traditional dial up access. The system enables the reduction of the cost of access for standard analogue modems, ISDN terminal adapters and Set-Top Boxes for digital T.V. The service provider may choose to provide free call access, or alternatively bill the remote user a proportion of the cost incurred by the ISP.
2. The system can be used to remotely access the Internet when customers are travelling nationally or internationally with their Laptop or Hand Held PC. This also allows an ISP to capture a revenue opportunity, which would previously have been out of their control.
3. The concept of free internet access is known within the United States ( due to free local calls) and as the US model demonstrates, un-metered access will result in connections being left open for long periods of time, and consequently the cost base of the service may increase. The system of the present invention may be adapted to cease the connection after a definable period of inactivity and reinitiate the connection should an email or some alternative message delivery to the remote user require delivery. This application will only be initiated in instances where the server has dropped the call because the call has exceeded the defined period of inactivity.

The words "comprises/comprising" and the words "having/including" when used herein with reference to the present invention are used to specify the presence of stated features, integers, steps or components but does not preclude the presence or addition of one or more other features, integers, steps, components or groups thereof.

## Claims

1. A call back system to facilitate a connection to be effected between a remote user device (1a, 1b) and a server (3) over a network (2), the system comprising:
a) call reception means (24, 51) for receiving user request from a remote user device,
b) call back means (27, 58) for effecting a call back to the remote user device,
**characterised in that** the system further comprises:
c) a database (4) having a plurality of user profiles, each user profile identified with a specific user and associated with specified user parameters,
d) user authentication means (25, 53, 26, 56) for authenticating the received call with a specific user profile on the database.

2. The system as claimed in claim 1 wherein the call reception means (24) is adapted to obtain the number of the remote user device from the caller line identity (CLI), thereby enabling a remote user to be called back without requirement for an initial connection between the remote user device and the server to be made.

3. The system as claimed in any preceding claim further comprising a data cache locatable on the user device, the data cache adapted to store at least one user associated parameter, the system adapted to display (22, 51) the user associated parameter from the data cache on initiation of the user request by the remote user device.

4. The system as claimed in claim 3 further comprising provider transmission means (28) adapted to update the user associated parameters stored on the remote device cache, the update of the associated parameters being effected during communication between the remote device and the server.

5. The system as claimed in any preceding claim wherein the associated parameters define the content of advertising media, the advertising media being displayed on initiation of the connection by the remote user device, the content of which being associated with the specific user profile of the user remote device.

6. The system as claimed in any preceding claim wherein the network is the internet, the remote user device being a personal computer or similar device and the server being an service provider.

7. A method for initiating a call back from a server to a remote user device over a network comprising the steps of:
a) the server receiving (22, 51) a call from the remote user device,
b) establishing (28) a connection between the server and the remote user device,
**characterised in that**
c) said remote user device is authenticated (25, 53) using specified user profiles maintained on a server database of user profiles, and
d) the initiation of the connection between the remote user and the server effects (22, 51) the display of images as determined by the user profile of the remote user device.

8. The method as claimed in claim 7 wherein said step of receiving a call from a remote user device captures (24) the caller line identity (CLI) of the remote user device, thereby providing the server with a call back number to complete the connection between the server and the remote user device, without requiring the user to complete a user initiated call.

9. A computer program which when run on a computer is adapted to effect the method steps of any one of claims 7 to 8.

10. A computer implemented method of displaying advertising media, the choice of advertising media being selected on the basis of user parameters, the display of the advertising media being effected on initiation of a communication link between a remote user device, the advertising media having been previously stored locally on the remote user device.

11. The method of claim 10 wherein the establishment of a communication link between the remote user device and the server effects a refresh of the advertising media stored locally on the remote user device, the refreshed advertising media being pushed from the server to the remote user device.
